# EUROPEAN PATENT APPLICATION

(11) **EP 2 846 546 A1**
(43) Date of publication of application: **11.03.2015**
(21) Application number: 14158212.2
(22) Date of filing: 06.03.2014
(51) Int. Cl.: H04N 9/82, G11B 27/10

(54) **Receiving device, transmitting device and transmitting/receiving system**

(30) Priority: 06.09.2013 JP 2013185121
(71) Applicant: Kabushiki Kaisha Toshiba, Tokyo 105-8001 (JP)
(72) Inventor: Ito, Hiroaki, Tokyo, 105-8001 (JP); Yamashita, Michio, Tokyo, 105-8001 (JP); Nakagawa, Tomoki, Tokyo, 105-8001 (JP)
(74) Representative: Henkel, Breuer & Partner

(57) **Abstract**

According to one embodiment, an electronic device (100) characterized by comprising a subtitle data acquisition controller (231) configured to acquire subtitle data from a title being reproduced, a seek instruction receiving controller (201(200)) configured to receive an instruction to carry out a seek to an image start point which is a temporal position corresponding to the subtitle data acquired by the subtitle data acquisition controller, a title type identifying controller (201(200)) configured to identify a type of the title being reproduced at the point in time at which the seek instruction receiving controller has received the seek instruction, and a display controller (234(200)) configured to control, when the seek is carried out to the image start point corresponding to the subtitle data with respect to the title being reproduced at the point in time at which the seek instruction receiving controller has received the seek instruction, the image start point corresponding to the temporal position of the subtitle data according to the title type identified by the title type identifying controller.

## Description

Embodiments described herein relate generally to an electronic device, method for controlling the same, and program for controlling the scene.

In a device (electronic device such as a television receiver, recording/reproducing device or the like including a recording medium) configured to record a television signal, the capacity of a recording medium used for signal recording has been remarkably increased. Accordingly, a large number of programs can be recorded on the recording medium.

However, concomitantly with an increase in the number of programs to be recorded, it sometimes becomes troublesome for the user to find out and reproduce a program which meets the taste of the user within a time in which the user can watch a recorded program or to efficiently retrieve and reproduce a specific scene or to carry out a similar thing. Thus, it is now an object to find a way to save time and labor, and select and reproduce a program which meets the taste of the user, and furthermore scene included in the program.

In order to identify a scene, the use of subtitle information (subtitled scene) included in the broadcast signal supplied in the PES form and displayed in time-synchronism with the image/sound has already been put to practical use. That is, when the display time of the subtitled scene can be identified, it is possible to directly retrieve and reproduce a scene (subtitled scene) which the user desires to watch (subtitled scene jump).

However, when a word (sound information) used in broadcasting is made character information as in the case of, for example, a news program, the subtitled scene (subtitle information) is accompanied by a time lag in some cases and, on the other hand, there is sometimes a case where a temporal difference between the image and word is substantially adjusted as in the case of, for example, a movie.

An object of the present embodiments, provided is a reproduction apparatus, reproduction method, and reproduction program which output a schedule corresponding to content reproduction.

A general architecture that implements the various features of the embodiments will now be described with reference to the drawings. The drawings and the associated descriptions are provided to illustrate the embodiments and not to limit the scope of the invention.
FIG. 1 is an exemplary diagram showing an example of a television receiver according to an embodiment;
FIG. 2 is an exemplary diagram showing an example of a program guide according to the embodiment;
FIG. 3 is an exemplary diagram showing an example of a program guide and subtitled scene included in a broadcast program broadcast on the basis of the program guide according to the embodiment;
FIG. 4 is an exemplary diagram showing an example of an operation of the television receiver at the time of reception of a broadcast signal according to the embodiment;
FIG. 5 is an exemplary diagram showing an example of an operation of the television receiver at the time of reception of a broadcast signal according to the embodiment;
FIG. 6 is an exemplary diagram showing an example of screen display according to the embodiment;
FIG. 7 is an exemplary diagram showing an example of screen display according to the embodiment;
FIG. 8 is an exemplary diagram showing an example of an operation of the television receiver in terms of software according to the embodiment;
FIG. 9 is an exemplary diagram showing an example of screen display according to the embodiment;
FIG. 10 is an exemplary diagram showing an example of screen display according to the embodiment;
FIG. 11 is an exemplary diagram showing an example of screen display according to the embodiment;
FIG. 12 is an exemplary diagram showing an example of screen display according to the embodiment;
FIG. 13 is an exemplary diagram showing an example of an operation of the television receiver in terms of software according to the embodiment;
FIG. 14 is an exemplary diagram showing an example of an operation of the television receiver in terms of software according to the embodiment; and
FIG. 15 is an exemplary diagram showing an example of a television receiver according to an embodiment.

Various embodiments will be described hereinafter with reference to the accompanying drawings.

In general, according to one embodiment, an electronic device characterized by comprising: a subtitle data acquisition module configured to acquire subtitle data from a title being reproduced; a seek instruction receiving module configured to receive an instruction to carry out a seek to an image start point which is a temporal position corresponding to the subtitle data acquired by the subtitle data acquisition module; a title type identifying module configured to identify the type of a title being reproduced at the point in time at which the seek instruction receiving module has received the seek instruction; and a display control module configured to control, when the seek is carried out to the image start point corresponding to the subtitle data with respect to the title being reproduced at the point in time at which the seek instruction receiving module has received the seek instruction, the image start point corresponding to the temporal position of the subtitle data according to the title type identified by the title type identifying module.

Embodiments will now be described hereinafter in detail with reference to the accompanying drawings.

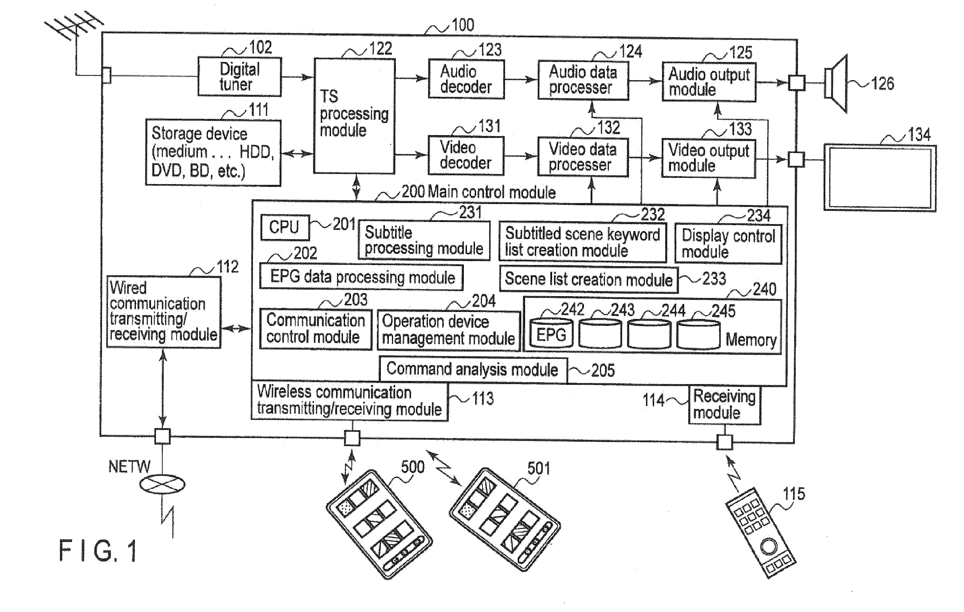

In FIG. 1, first, an example of the configuration of a television receiver to which an embodiment is applied is shown. The embodiment can be applied to not only the television receiver but also a recording/reproducing device, personal computer, server, set-top box, and the like.

A description will be given by using a television receiver shown in FIG. 1 as a representative. A television receiver 100 includes a digital tuner device 102. The digital tuner device 102 includes a plurality of tuners each of which is configured to receive, for example, a scrambled digital terrestrial broadcast signal. The plurality of tuners are, for example, four to eight tuners, and the tuners can receive broadcast signals of different channels. The digital tuner device 102 may include, for example, tuners (not shown) for reception of DBS digital broadcasts.

A signal of a broadcast program received by the tuner device 102 is input to a TS processing module 122, in which transport streams (TSs) of a plurality of channels (CHs) are multiplexed into one TS again. A multiplexed TS includes packet trains of broadcast programs of the channels. Identification information for identification of channels and packets is added to a packet of each channel. The multiplexed TS is input to a storage device 111. Further, among the TSs input to the TS processing module 122, a packet (called a control packet or a service information packet in some cases) including control information is input to a main control module 200 and is processed therein. Further, a packet including electronic program guide (EPG) data is also included in the TS. A program guide can be constituted by utilizing the EPG data.

The storage device 111 includes, for example, a hard disk drive and optical disk recording/reproducing device. An optical disk includes a Digital Versatile Disk (DVD [registered trademark]), Blu-ray Disk (BD [registered trademark]), and the like.

For example, all the programs broadcast on a plurality of channels of an amount corresponding to two to three weeks can be stored (automatically recorded) in the hard disk of the storage device 111. All the programs of an amount corresponding to one to four months may also be automatically recorded by addition of a hard disk drive. Recoded programs other than those specifically designated are automatically deleted in the order from the oldest one. The specifically designated programs are programs designated by the user as programs to be permanently preserved. When specific designation is to be carried out, the user selects, for example, a specific program designation button on a menu screen. Then, a program guide is displayed. The user selects a desired program of the program guide by using the cursor and presses a decision button, whereby specific program designation is carried out.

A packet to be sent from the TS processing module 122 to the main control module 200 includes, for example, an entitlement control message (ECM) serving as encrypted information of a broadcast program, information such as an event information table (EIT) which is a table describing event information such as a program name, performer names, start time, and the like, and the EPG data. A program guide can be constituted by utilizing the EPG data.

Video data included in the packet is encoded in, for example, the Moving Picture Experts Group (MPEG) system, Advanced Video Coding (AVC) system or the like. Further, audio data in the audio packet is encoded in, for example, the pulse code modulation (PCM) system, Dolby system, MPEG system or the like.

The TS processing module 122 includes a packet separation unit and separates a video packet and audio packet of the program from each other, and further separates packets including other control data and EPG data from each other and outputs the separated packets.

The packet including audio data and separated by the TS processing module 122 is input to an audio decoder 123 and is subjected to decoding corresponding to the encoding system. The audio data decoded by the audio decoder 123 is subjected to synchronous processing, volume control and the like by an audio data processer 124, and is supplied to an audio output module 125. The audio output module 125 executes stereo separation processing or the like corresponding to the speaker system, and supplies the output thereof to a speaker 126.

The packet including video data and separated by the TS processing module 122 is input to a video decoder 131 and is subjected to decoding corresponding to the encoding system. The video data decoded by the video decoder 131 is subjected to synchronous processing, brightness adjustment, color tuning, and the like by a video data processer 132. The output of the video data processer 132 is supplied to a video output module 133. It should be noted that display position (temporal position) information is attached to the video data decoded by the video decoder 131 in units of (video) frames. Further, the video decoder 131 (or the TS processing module 122) recognizes the type of the decoded video data such as a moving image or a still image, or a genre of an image such as a live broadcast, news, a movie, an animation or the like, and the recognition result is temporarily stored in a predetermined area of a memory 240. It should be noted that the information on the type of image or the information on the genre can also be acquired in an EPG data processing module 202 (configured to process EPG data separated by the TS processing module 122).

The video output module 133 can multiplex data, a figure, program guide, and the like from the main control module 200 and main video signal into one signal. Further, the video output module 133 sets the output video signal to a scale, resolution, number of lines, aspect ratio, and the like corresponding to a display 134, and outputs the resultant signal to the display 134.

It should be noted that an audio packet and video packet of a pay program are encrypted in some cases. In such a case, although there is a processing system configured to decrypt the encrypted data by using key information, the system is omitted here.

The main control module 200 includes a central processing unit (CPU) 201, EPG data processing module 202, communication control module 203, operation device management module 204, command analysis module 205, and the like.

The CPU 201 carries out adjustment of the overall operation sequence of the main control module 200.

The EPG data processing module 202 can create a program guide for display by using the received EPG data. Further, the EPG data processing module 202 can store various data items included in the EPG data in association with the programs.

The communication control module 203 can carry out communication with the outside and capture an operation command, data, content items, and the like. The captured content items and data can be stored in, for example, the storage device 111 or the nonvolatile memory (may be called a storage unit or a storage device) 240. The communication control module 203 can transmit data, content items, and the like from the television receiver 100 to the outside.

The communication control module 203 is connected to a wireless communication transmitting/receiving module 113 and wired communication transmitting/receiving module 112. The wired communication transmitting/receiving module 112 can carry out data transmission/reception between itself and a remote (external) server or a home server through the Internet. The wireless communication transmitting/receiving module 113 can carry out data transmission/reception between itself and a plurality of mobile devices 500 and 501, and is used for short-range communication. Further, the television receiver 100 can also receive an operation signal from a remote controller 115 through a receiving module 114.

The operation device management module 204 can grasp and manage device recognition data of the mobile devices 500 and 501, remote controller 115, and the like each configured to give an operation signal to the main control module 200.

The command analysis module 205 can analyze an operation command input from outside, and cause the television receiver 100 to reflect an operation corresponding to the command.

Furthermore, a subtitle processing module 231, subtitled scene keyword list creation module 232, scene list creation module 233, and display control module 234 are included in the main control module 200. Further, the main control module 200 also includes the memory 240 used to construct database files.

The memory 240 can preserve therein various data items, applications, and the like to be preserved in the main control module 200. A data file 242 preserves therein the EPG data. The EPG data is periodically updated every week or two. Further, when a sudden change in the program occurs, automatic data update is carried out according to a control signal.

The subtitle processing module 231 extracts data including subtitle data created from the subtitles included in the program (mainly an automatically received program), and time data indicating the time during which the subtitles are displayed as subtitled scene data. The subtitled scene data is stored in a database file 243 in the memory 240.

The subtitled scene keyword list creation module 232 extracts at least subtitle data from a program (mainly a program which is selected by the user by an operation, and is being watched) being reproduced or being received, and extracts a character string of the subtitle data as a subtitled scene keyword. The extracted subtitled scene keyword is for example, a "noun" unit, and is stored in a database file 244 in the memory 240.

The scene list creation module 233 executes an operation when the user selects, in a state where a plurality of subtitled scene keywords described above are displayed on the display 134, any one of the keywords by an operation.

At this time, the scene list creation module 233 accesses database file 243 on the basis of the selected keyword. Further, the scene list creation module 233 creates scene selection items of a subtitled scene corresponding to the selected keyword, and outputs the created scene selection items to the display 134 through the display control module 234 as a scene list. At this time, the selection items can be created for each program, and further, a plurality of selection items can be created in one program.

By the configuration described above, database file 243 can store therein subtitle data created from the subtitles included in the program, and data including time data indicating the time during which the subtitles are displayed as subtitled scene data.

Database file 244 can extract at least subtitle data from a program (program being watched) being reproduced or being received, and store therein a character string (noun) of the subtitle data as a keyword. Accordingly, when the reproduction time or the receiving period of the program is a short time from the reproduction point in time or the reception point in time, accumulation of keywords is small.

When an operation signal (command) for displaying a keyword is input during reproduction or reception (when a program is being watched), the subtitled scene keyword list creation module 232 can output a plurality of keywords stored in database file 244 as keywords for display.

When an arbitrary keyword is selected from the plurality of keywords displayed on the display 134, the scene list creation module 233 can output selection items of a plurality of scenes including subtitle corresponding to the selected keyword as selection items for scene list display. When a function of displaying the past keywords is provided, a history or a transition of a keyword in which the user is interested can be seen.

A database file 245 is utilized to store therein other data items. For example, a keyword selection history may be stored therein. Further, statistical data of keywords selected by the user within, for example, the last one to two weeks may be stored therein.

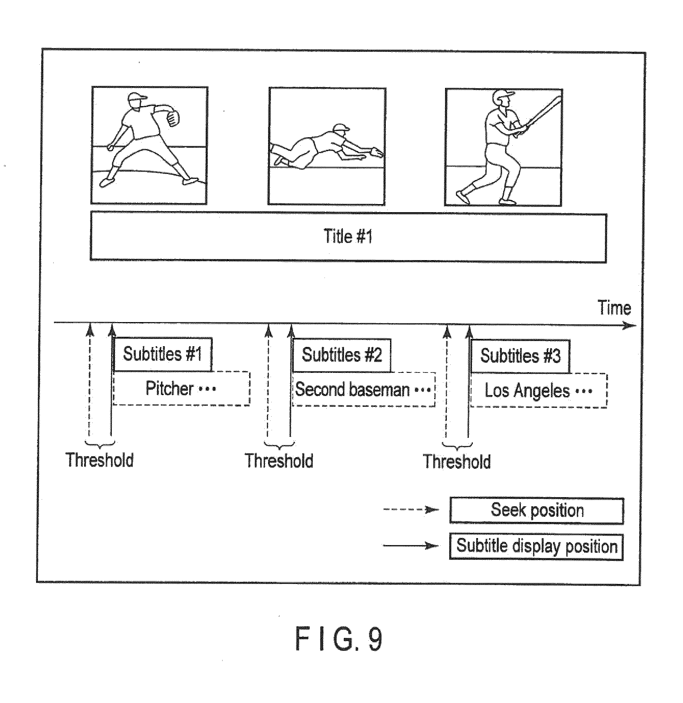

The display control module 234 can generally control the video signal to be displayed on the display 134 through the video output module 133. Further, the display control module 234 can also be called an on-screen display (OSD) controller. The display control module 234 can also carry out adjustment processing of the resolution, display size, display area, and the like of an image signal. Further, the display control module 234 can supply a video signal of a program guide created by using EPG data, and menu video signal created in the main control module 200 according to an operation signal to the video output module 133. Further, the display control module 234 takes charge of coordination between a display position of a subtitled scene and display position of an image to be described later in the latter part in connection with FIGS. 9 to 14.

The mobile devices 500 and 501 can also remotely control the television receiver 100.

The mobile devices 500 and 501 can access a server through a base station or the Internet (not shown). The mobile devices 500 and 501 can naturally download content items provided by the server, and can download various applications, and game software, and transfer the downloaded applications, and game software to the main control module 200 through the wireless communication transmitting/receiving module 113. Further, the mobile devices 500 and 501 can transfer information (for example, an address of a web server, mail address, network address, and the like) used to acquire content items to the main control module 200 through the wireless communication transmitting/receiving module 113.

An address of a web server, mail address, and the like and, furthermore, moving image, still image, photographic image, and the like may be called here "recommended information" or "interesting information".

A menu video signal, program guide video signal, and the like for display are stored and/or managed in, for example, database file 245. When display of a menu, and display of a program guide is carried out, menu screen data, and a program guide video signal are read from a data storage unit (memory or hard disk) on the basis of the control of the display control module 234. Thereby, a menu image, and program guide image are displayed on the display 134.

The menu video signal, program guide video signal, and the like for display can also be transmitted to the mobile device 500 or 501. When the mobile device 500 or 501 requires a menu video signal, program guide video signal, and the like, the main control module 200 can transmit the menu video signal, program guide video signal, and the like thereto. A keyword list, scene list, and the like to be described later may also be transmitted to the mobile device 500 or 501.

The mobile device 501 or 502 can display the menu video signal, program guide video signal on a touch panel screen, and the user can give an operation command signal to the television receiver by touching an operation button displayed on the touch panel screen or a pointing panel screen.

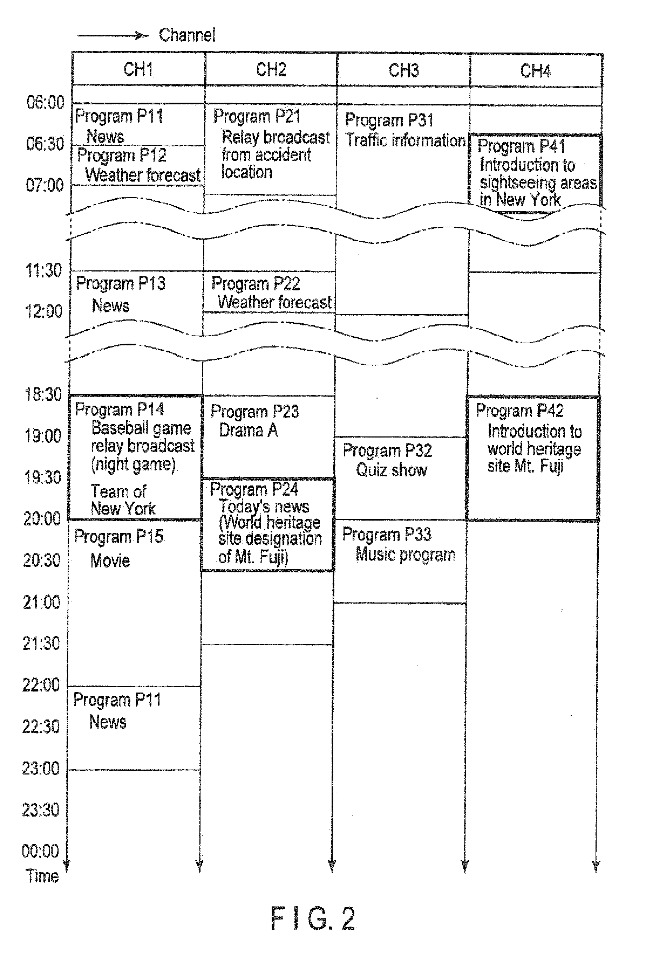

In FIG. 2, an example of a program guide created by using the EPG data is shown.

The program guide shown in FIG. 2 is displayed on the display 134 by the control of the display control module 234 when, for example, a "program guide" button of the remote controller 115 is pressed. In the example of FIG. 2, the time is displayed longitudinally, and channels CH1, CH2, CH3, . . . are displayed laterally. By operating a scroll button (button to which an arrow indicating a scroll direction is attached) of the remote controller 115, and scrolling the screen in the lateral direction or in the longitudinal direction, a program column of the next time or the next channel can be displayed.

The example of FIG. 2 shows that on channel CH1, programs such as a program P11 (news), program P12 (weather forecast), program P13 (news), program P14 (baseball game relay broadcast), program P15 (movie), program P16 (news), ... are to be broadcast.

It is shown that on channel CH2, programs such as a program P21 (relay broadcast from an accident site), program P22 (weather forecast), program P23 (drama A), program P24 (today's news: world heritage site designation of Mt. Fuji), . . . are to be broadcast.

It is shown that on channel CH3, programs such as a program P31 (traffic information), program P32 (quiz show), program P33 (music program), . . . are to be broadcast.

It is shown that on channel CH4, programs such as a program P41 (introduction of sightseeing areas in New York), program P42 (introduction to world heritage site Mt. Fuji), . . . are to be broadcast.

The user can move the cursor to a position of a desired program by a remote controller operation in a state where the program guide is displayed. By pressing the decision button of the remote controller when the cursor is at a position of the desired program, watching of the program is enabled.

The program guide data includes program guides of past programs, program guide of current (today's) programs, and program guides (program guides in the future of one to two weeks) of the future programs. However, in FIG. 2, for ease of understanding, only the today's program guide is shown, and a description is given by assuming that the current time is, for example, 22:00.

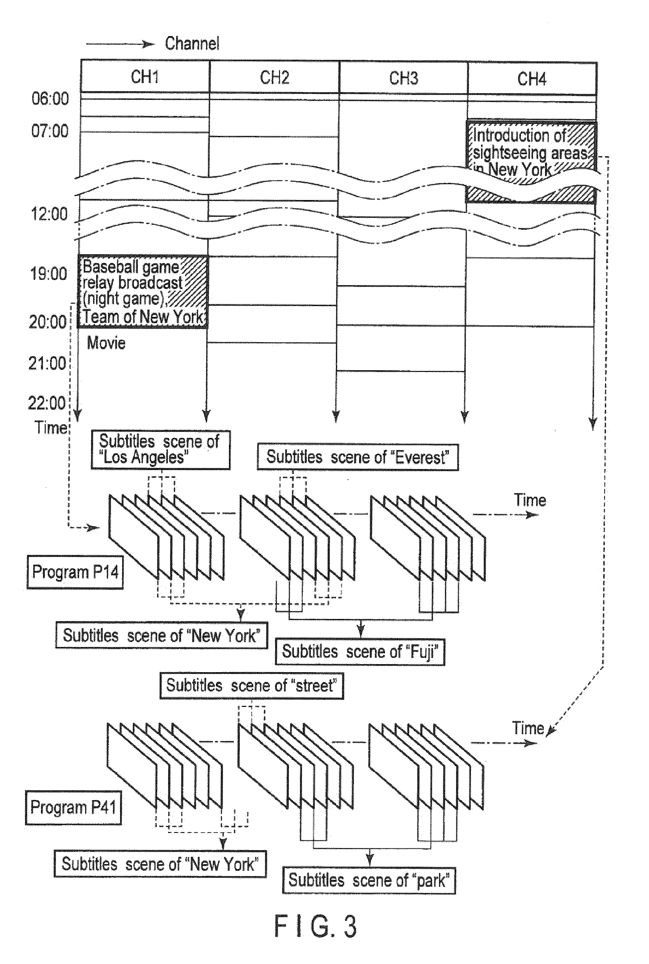

FIG. 3 is a view for explaining the processing to be executed when the device of the embodiment automatically records a program.

The television receiver of the embodiment is provided with the subtitle processing module 231. Accordingly, subtitle processing is executed when program P14 (baseball game relay broadcast) shown in FIG. 2 and FIG. 3 is recorded. In the subtitle processing, data including subtitle data created from the subtitles included in the program, and time data indicating the time at which the subtitles are displayed is extracted as a subtitled scene. The subtitled scene data is stored in database file 243 in the memory 240.

Now, it is assumed that the baseball game to be broadcast in program P14 is held between NY-Fuji, the team of New York, and LA-Everest, the Los Angeles team. It is expected that keywords such as "New York", and "Fuji" frequently appear in program P14 as subtitles. Further, it is expected that keywords such as "Los Angeles" and "Everest" frequently appear.

Thereby, subtitled scene data of a scene of subtitles "New York", and scene of subtitles "Los Angeles" is stored in database file 243 in the memory 240.

In this case, besides, a large number of subtitled scene data items are obtained, and hence when data is to be stored in database file 243, restriction processing is carried out. As the restriction conditions, various settings can be set.

For example, a plurality of, for example, 20 to 30 keywords each having a high appearance frequency are selected from the top in one program. Alternatively, a preference determination unit (not shown) registers keywords (to be described later) selected by the user in the past as registered keywords. Further, upon detection of a "keyword", when the detected keyword is identical to a registered keyword registered in the preference determination unit, the subtitle processing module 231 adds a preference point (for example, +1) to the keyword. Thereby, it is possible to set a ranking order among a plurality of keywords each having a high appearance frequency. In this case, one of points (+5, +4, +3, +2, +1, +0) may be added to each of the keywords each having a high appearance frequency according to the order, and the point may be utilized together with the preference point to set a condition for determining the ranking order of a plurality of keywords.

When a keyword having the highest point is determined in one program, the determined keyword may be made the representative keyword of the program. Further, as a representative keyword, a word identical or similar to the program name may be selected.

It is assumed that program P41 (introduction of sightseeing areas in New York) is to be recorded next. In this case, a scene including the subtitles "New York" is frequently displayed. Further, a scene including, for example, subtitles "building" is also frequently displayed. Besides, scenes including subtitles "street", "park" or the like are displayed a relatively large number of times.

It should be noted that points to be given to the programs may be made different from each other according to the genre, broadcasting time schedule, and broadcasting station as a condition for narrowing the display candidates from a large number of subtitled scenes. Further, preservation classified into items according to the genre, broadcasting time schedule, and broadcasting station may be carried out.

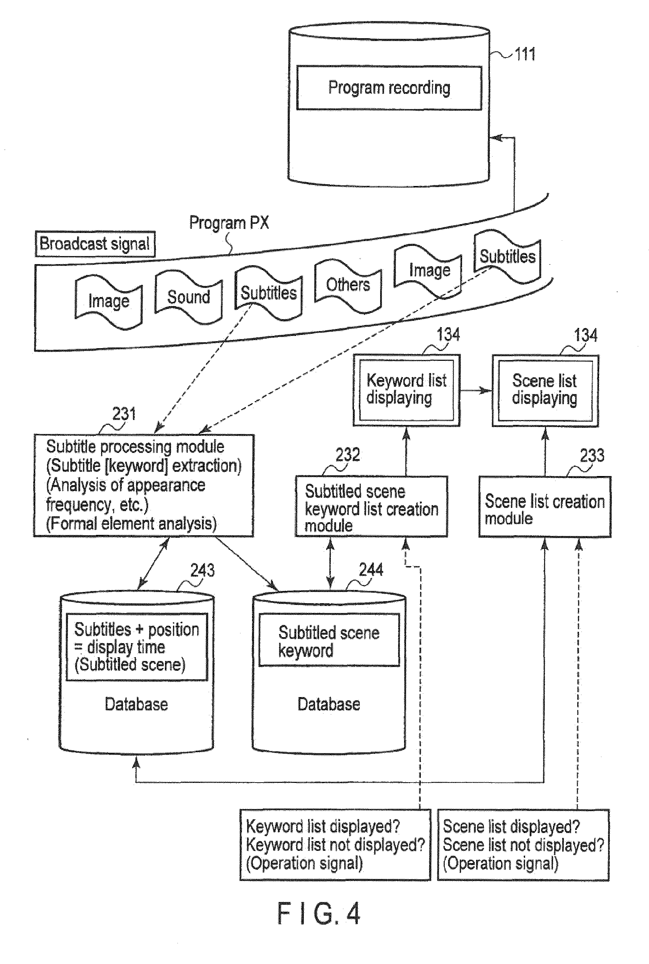

FIG. 4 shows blocks associated with operations to be carried out when a broadcast signal (temporarily referred to as a program PX) is automatically recorded by the recording/reproducing device 111. A subtitle stream included in the broadcast signal is captured by the subtitle processing module 231. The subtitle processing module 231 reads subtitle data (subtitle character string, and display time data) from the subtitles of the subtitle stream, and outputs the read data to database file 243 as subtitled scene data.

Further, the subtitle processing module 231 subjects the subtitle character string data to formal element analysis to thereby extract a "noun", and outputs the extracted noun to database file 244 as a subtitled scene keyword. In this case, a subtitled scene keyword of a program currently being aired or a program currently being reproduced is stored in database file 244. Accordingly, the subtitle processing module 231 may store, in database file 244, a subtitled scene keyword which is a subtitled scene keyword of a program currently being aired or currently being reproduced, and is extracted from character string data temporarily stored in database file 243.

That is, as the method for storing subtitled scene data from the subtitle processing module 231 in database file 243, and storing the keyword in database file 244, two forms are practicable as described above, and any one of them may be employed. One of the forms is a form in which data is stored from the subtitle processing module 231 to database file 243 and database 244 in parallel, and the other is a form in which a keyword is created from subtitled scene data temporarily stored in database file 243, and the created keyword is stored in database file 244.

Regarding the keyword described above, a large number of subtitled scene keywords are obtained, and hence when a subtitled scene keyword is to be stored in database file 244, restriction processing is carried out as in the case previously described.

In the middle of automatic recording, storage of subtitled scenes, and storage of subtitled scene keywords in database files 243 and 244 are carried out irrespective of the operation of the user.

Here, it is assumed that the user carries out an operation through the remote controller 115 in order to display a keyword. Then, the subtitled scene keyword list creation module 232, and display control module 234 shown in FIG. 1 select several keywords associated with the program PX constructed in database file 244, and each having the high priority order, and carry out processing for displaying the keywords on the display 134.

As described above, the device of this embodiment can display a plurality of keywords each having, for example, a high appearance frequency among a plurality of keywords which can be obtained from the subtitles of a program currently being watched. Here, it is assumed that the user has selected any one of the keywords on the basis of an operation of the remote controller, and has pressed a decision button for the purpose of displaying a scene list.

Then, the scene list creation module 233 creates a scene list of a plurality of subtitled scenes each having subtitles corresponding to the selected keyword by referring to the first database file, and outputs the scene list as a list for display. Thereby, the display 134 is switched to a scene list display state. The scene list includes a plurality of scene selection items.

Next, the type of the keyword list to be created by the subtitled scene keyword list creation module 232, and type of the scene list created by the scene list creation module 233 will be described below.

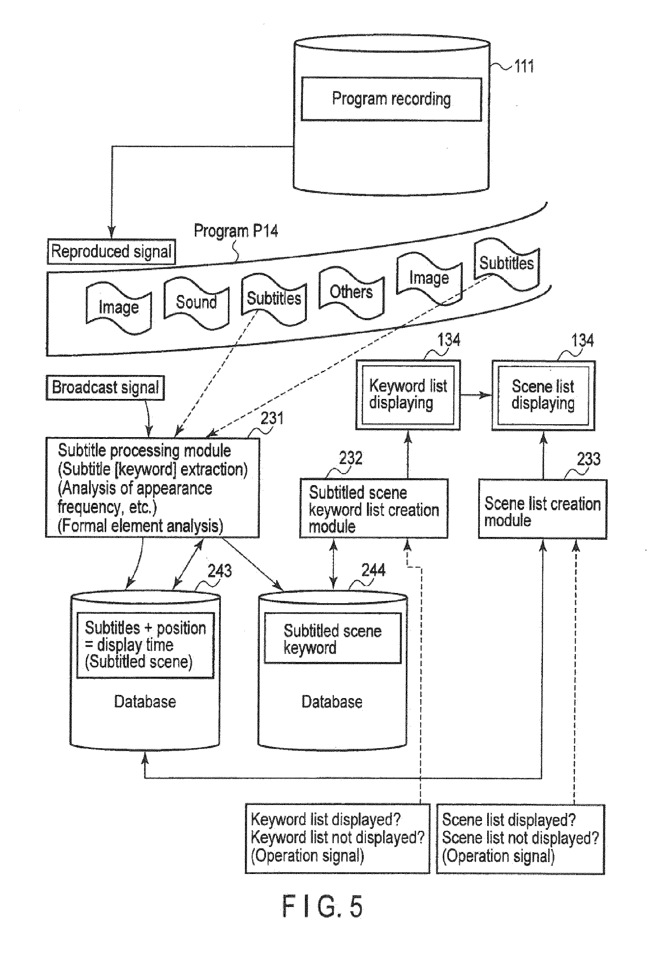

FIG. 5 shows a case where program P14 (baseball game relay broadcast: NY-Fuji vs. LA-Everest) recorded on the storage device 111 is reproduced.

The subtitle processing module 231 subjects the character string data of the subtitle stream in the reproduced signal to formal element analysis to thereby extract a "noun", and outputs the extracted noun to database file 244 as a subtitled scene keyword.

On one hand, at this time, it is not necessary to extract a subtitled scene of the reproduced signal to be stored in database file 243. However, on the other hand, an automatic receiving state is established, and hence subtitled scene data items of the program currently being received are consecutively stored in database file 243.

For example, when the user carried out an operation through the remote controller 115 in order to display a keyword, the subtitled scene keyword list creation module 232, and display control module 234 shown in FIG. 1 select several keywords associated with program P14 constructed in database file 244, and each having the high priority order, and carry out processing for displaying the keywords on the display 134.

As a result, for example, "New York", Fuji", "batter", "Los Angeles", "Everest", "pitcher", ... , "hit", ... , "homerun", and the like are displayed as a representative keyword list.

Here, it is assumed that the user is interested in, for example, "New York". It is assumed that the user has selected the keyword "New York" by operating the remote controller, and has pressed the decision button. Then, the scene list creation module 233 detects subtitled scene data in which the keyword "New York" is included. For example, the scene list creation module 233 creates a scene list indicating selection items of scenes included in program P41 (introduction of sightseeing areas in New York), and scene selection items of scenes of other programs (programs in which subtitles of "New York" are included) as a scene list for display. This is because in the case of program P41 (introduction of sightseeing areas in New York), a large number of subtitles "New York" are included therein.

When the user selects a selection item of a scene included in program P41 (introduction of sightseeing areas in New York) by the remote controller operation, and presses a decision button, the reproduction operation proceeds to the reproduction state of program P41.

In the above description, the relationship between program P14 and program P41 has been described for ease of understanding. However, actually, there is the strong possibility of a large number of data items of scenes of subtitles in which the keywords "New York" are included being present. In such a case, selection items of relevant scenes of a large number of programs can be displayed as a scene list. Although the number of selection items displayed on the screen is, for example, five to six, other selection items can be displayed on the screen by a scrolling operation.

It is assumed that for example, in the reproduction of program P14, the keywords "New York", "Fuji", "batter", and "Los Angeles" are displayed as a keyword list, and the user selects, for example, the keyword "Fuji".

As a result of the selection input, i.e., as a result of the selection of the keyword "Fuji", a scene list including selection items for selecting a scene of program P24 (news: world heritage site designation of Mt. Fuji), and program 42 (introduction to world heritage site Mt. Fuji) is displayed. Here, the user can determine which program the user should desire to watch by seeing the scene list.

In the above description, when the keyword "Fuji" is selected, in the scene list, representative scene lists of all the relevant programs are displayed. However, regarding the method for displaying the scene list, and method for utilizing the scene list, various methods are available, and hence a description will be given below.

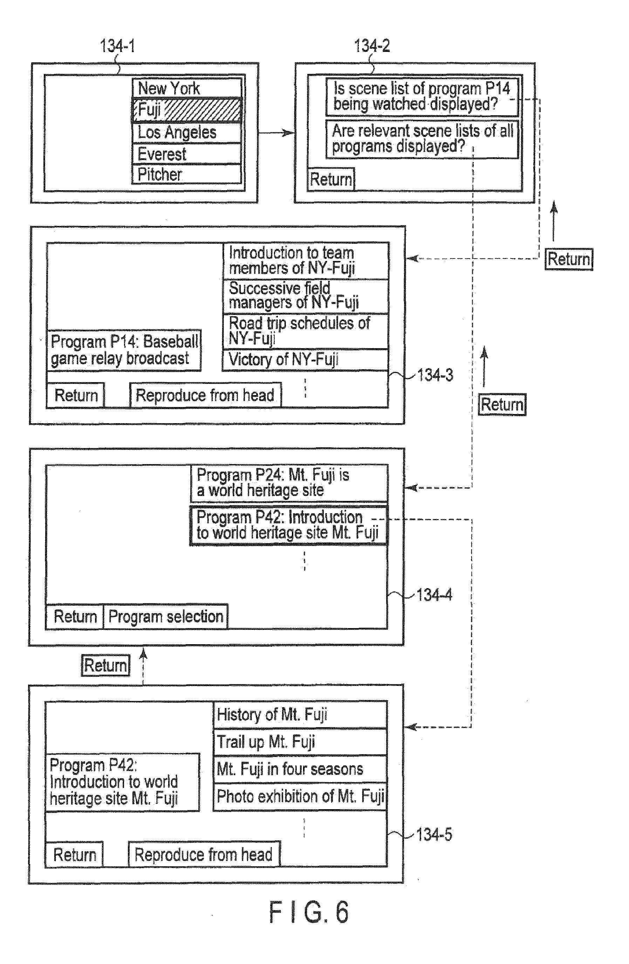

FIG. 6 shows an example of a method for utilizing a scene list.

On screen 134-1 of FIG. 6, the keywords "New York", "Fuji", "Los Angeles", "Everest", and "pitcher" which are included in the subtitle data of program P14 are displayed.

When the user selects, for example, the keyword "Fuji",
inquiring comments "Is a scene list of the program currently being watched displayed?", and "Are relevant scene lists of all the programs displayed?" are displayed as shown on screen 134-2.

When the user selects, for example, the comment "Is a scene list of the program currently being watched displayed?" by the remote controller operation, and presses the decision button, the screen is switched to screen 134-3.

On screen 134-3, selection items of a plurality of scenes created in "baseball game relay broadcast" of program P14 are displayed. In this example, selection items "introduction of team members of NY-Fuji", "successive field managers of NY-Fuji", "road trip schedules of NY-Fuji", "victory of NY-Fuji", and the like are displayed. Further, at the same time, selection buttons for selection of carrying out "reproduction using the cue function" and "reproduction from the head of the program" are also displayed. When the button of "reproduction from the head of the program" is selected, reproduction from the head of program P14 is started. When any one of the scene selection items, and "reproduction using the cue function" are selected or when any one of the selection items is selected, and the decision button is operated, reproduction using the cue function starting from the selected scene is executed.

When the user selects the comment "Are relevant scene lists of all the programs displayed?" on screen 134-2, the representative selection item (Mt. Fuji is world heritage site) of program P24, and representative selection item (history of Mt. Fuji) of program P42 are displayed as shown on screen 134-4.

In database file 243, a representative subtitled scene is determined for each program. There are various methods for determining a representative scene. For example, a scene in which subtitles having the highest frequency in the program appear is designated as the representative scene, and subtitled scene data is created together with time information of the scene.

On screen 134-4, although the number of scene list selection items is two, more selection items are displayed on the actual device. On this screen, any one of the programs is selected by the remote controller operation (in the example of FIG. 6, program P42 "introduction to world heritage site Mt. Fuji" is selected). Then, as shown on, for example, screen 134-5, it is shown that program P42 "introduction to world heritage site Mt. Fuji" is selected, and buttons for selection of carrying out "reproduction using the cue function" and "reproduction from the head of the program" are displayed.

When the button of "reproduction from the head of the program" is selected, and the decision button is pressed by the remote controller operation, reproduction from the head of program P42 is started. When any desired one of the selection items "History of Mt. Fuji", "Trail up Mt. Fuji", "Mt. Fuji in Four Seasons", and "Photo Exhibition of Mt. Fuji" is selected, and the decision button is pressed by the remote controller operation, reproduction using the cue function from the selected scene is started.

That is, when a plurality of scene selection items are to be created for display of a scene list, the scene list creation module 233 described previously can create selection items for scene selection which makes it possible to selectively designate one of selection items for quick reference of a plurality of scenes in the same program, and/or selection items for scene selection which makes it possible to selectively designate one of scenes of a plurality of programs recorded on the storage medium. When one of scene selection items for quick reference of a plurality of scenes in the same program is selected, jump reproduction is carried out in the same program. When one of scene selection items of a plurality of programs is selected, jump reproduction between programs is obtained.

Further, a return button is also displayed on the screen, and hence when the return button is selected, and decision button is pressed, it is possible to return to the previous screen.

Further, in a state where the scene list is displayed, the scene list creation module 233 can display a selection button indicating whether or not reproduction of a program corresponding to the scene selection item from the head thereof is to be carried out.

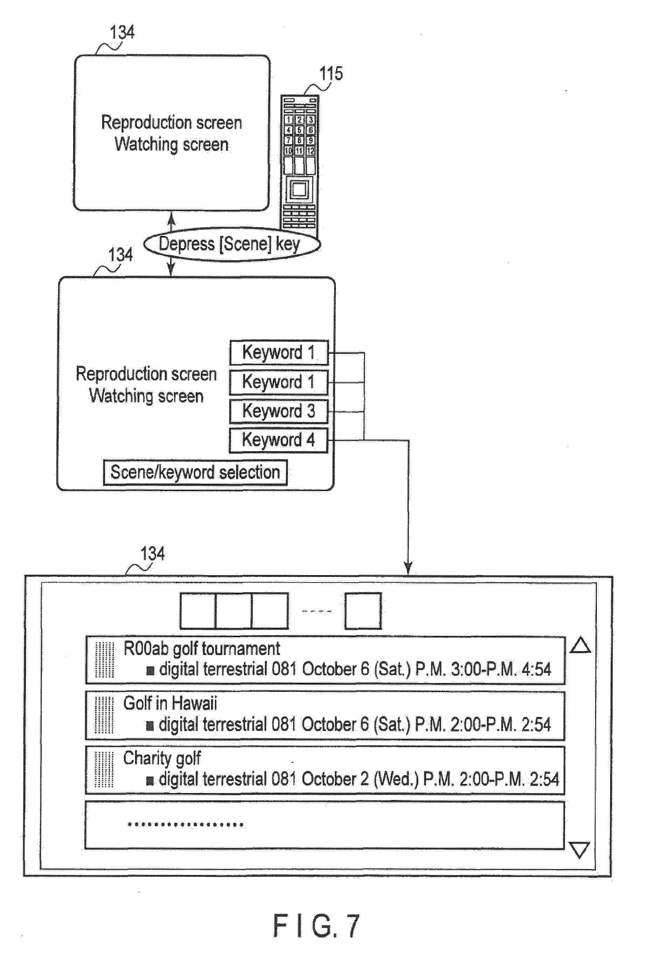

FIG. 7 is a view showing another example of an image to be displayed on the display in the operation of the embodiment.

While the reproduced image of the program is watched, when, for example, the "subtitled scene" button of the remote controller 115 is pressed by the user, a plurality of keywords (for example, 1 to 5) are displayed.

When any one of the keywords is selected by the operation of the remote controller 115, and the decision button of the remote controller 115 is pressed, a scene list display state is established. The example of FIG. 7 is an example in which a list of relevant scenes of all the programs is displayed. In the keyword selection, for example, "golf" is selected. Thereby, a scene list of programs associated with golf is displayed. In the selection items of the scene list, program names, broadcast time slots, and the like may be described.

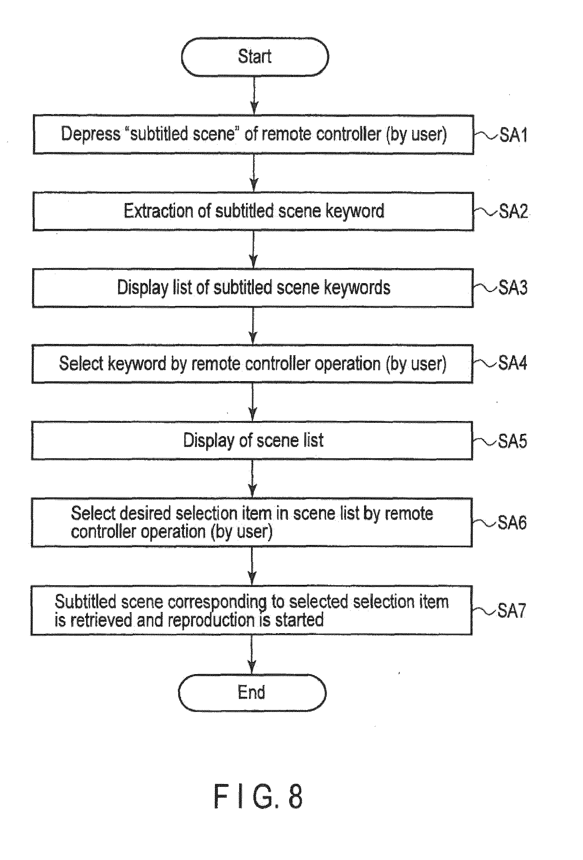

FIG. 8 is a flowchart showing an operation example in the embodiment. For example, when the user depresses a key of the remote controller on which "subtitled scene" is described, extraction of subtitled scene keywords is carried out, and a list of subtitled scene keywords is displayed (blocks SA1 to SA3). Here, when the user operates the remote controller to select a desired keyword, display of a scene list is obtained (blocks SA4, and SA5). Furthermore, when the user selects a desired scene selection item from among the scene list, reproduction of a program of the selected scene is started.

In the example described above, the keyword list is created from the program currently being watched by the user. This keyword list is not constituted of keywords extracted by examining the keywords of the past programs or the user's preference or taste. Accordingly, a scene list is created on the basis of a keyword in which the user is now interested.

When preference data is to be constructed, keywords selected in the past may be accumulated in, for example, database file 245, and the preference may be determined from the number of times of selection of the accumulated keywords. Further, keywords selected by the user may be collected in units of one week, and may be accumulated as history data together with the time-axis data. A change in the preference of the user can be read from the history data of the selected keywords.

In the above description, the description has been given in such a manner that the main control module 200 of FIG. 1 is integral with the television receiver. However, each of the digital tuner device 102, TS processing module 122, storage device 111, and entirety of the main control module 200 may be configured as an independent device. Alternatively, each of the subtitle processing module 231, subtitled scene keyword list creation module 232, scene list creation module 233, display control module 234, and memory 240 included in the main control module 200 may be configured as an independent device.

Incidentally, when the user selects a keyword from the above-mentioned subtitled scene keywords, and carries out a seek to a specific subtitle display position on the basis of instruction input of "subtitled scene jump" by the operation of the remote controller 115, a jump is carried out to a moving image (scene) different from the expected scene depending on the subtitle display timing in some cases (there is the possibility of the user being caused to watch a moving image different from the scene expected by the user). For example, when subtitles appear at timing immediately before a commercial, if a seek is carried out to the subtitle position, there is sometimes a case where the commercial seems like the corresponding scene to the user.

Further, there are cases where there is a difference between the sound and subtitle display in timing depending on the genre of the program as in the case of, for example, a news program or the like in which the timing of subtitle display is later than the sound and, as in the case of a drama, a movie or the like in which the sound and subtitle display are substantially coincident with each other.

Furthermore, when a position of a thumbnail image obtained by cutting out picture data included in a moving image as a still image is to be designated, causing the subtitle display timing of the specified thumbnail image to become coincident with a different thumbnail image should be avoided (in "subtitled scene jump" specifying a thumbnail image, it is necessary to make the objective image (thumbnail) and subtitled scene coincident with each other).

Although an example is shown in FIG. 9, subtitle data (subtitle start time, and subtitle character data) acquired from the title being reproduced is displaced toward the previous position by an amount corresponding to a predetermined threshold when the user carries out a seek to a subtitle position (time) satisfying the condition selected by the user as described above. When reproduction is started from the position of the seek destination, the position of the subtitle data selected by the user is reproduced.

That is, when reproduction of the title is started, synchronization of the subtitle data is carried out after synchronization between the image and sound is achieved, and then the subtitle data is displayed from the point of time at which the synchronization is achieved, and hence a time lag between the reproduction start time and the time at which the subtitle data is displayed is caused. Here, the displacement of the seek described above, and shown in FIG. 9 is utilized to advance the seek position to a position (position of the image data at the time earlier than the subtitle start time by a length of time corresponding to the threshold of the processing) a little earlier than the subtitle start time in terms of time, whereby synchronization of the subtitle data is completed. Accordingly, it becomes possible to securely reproduce the title of the position at which the subtitle data selected by the user is to be displayed.

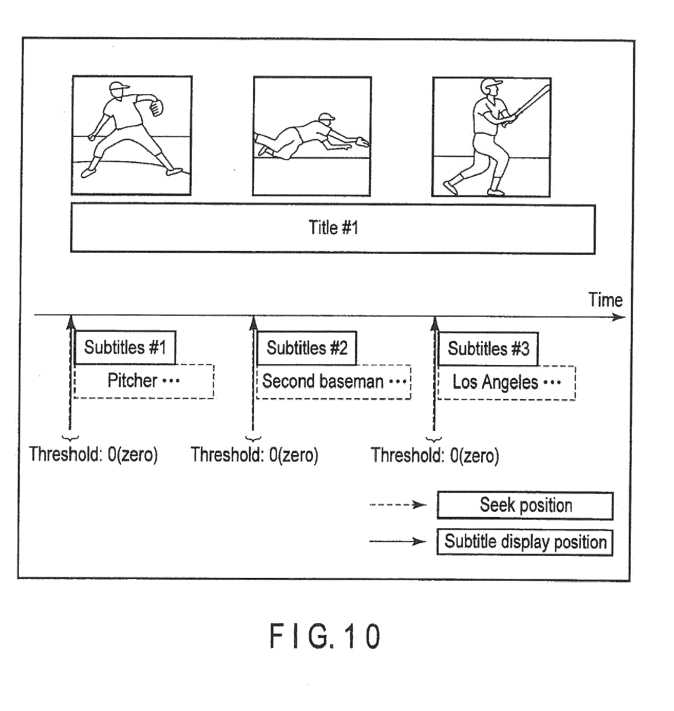

FIG. 10 shows an example of adjustment of the subtitle seek position corresponding to the above-mentioned thumbnail image.

As described above, when an object of the subtitled scene satisfying the condition selected by the user is a thumbnail image, it is necessary to cut out an image of the same place as the position at which the subtitle data is displayed as a still image.

On the other hand, in the case of an image including the genre of the title, for example, news or an image having a large motion, the sound subtitle data display timing are not coincident with each other in some cases, and hence, regarding the thumbnail image, there is the possibility of the subtitle data position, and place of the cut-out image deviating from each other.

Against such a backdrop, in the case where the objective image is a thumbnail image as shown in FIG. 10, it is necessary to adjust the subtitle display position (subtitle data position, i.e., subtitle start time) to the position of the thumbnail image (time). That is, regarding the threshold described in connection with FIG. 9, the threshold is [0 (zero)].

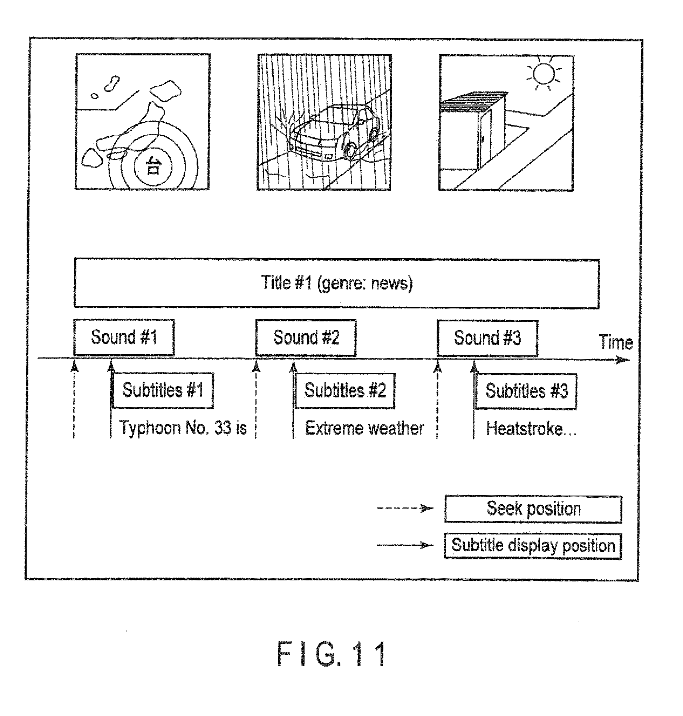

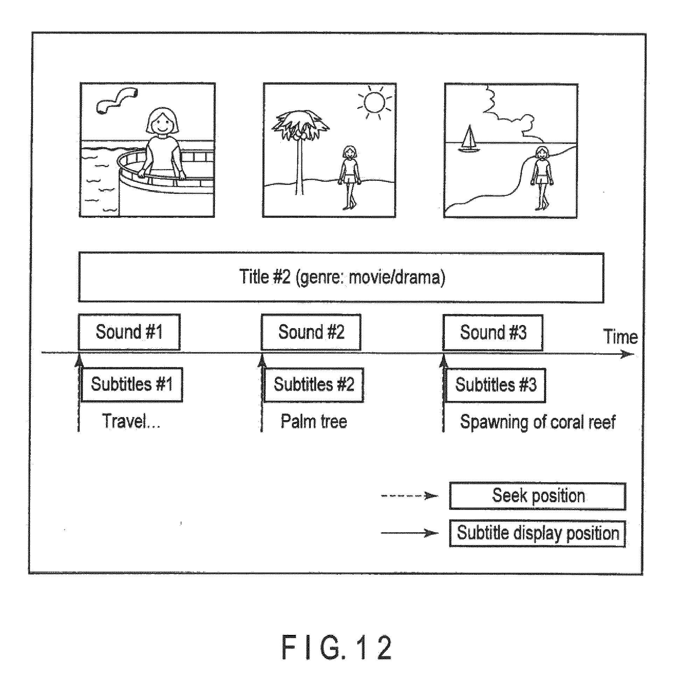

Each of FIG. 11, and FIG. 12 shows examples of correction of the seek position based on the genre.

As described above, when the genre of the title is a drama, a movie or the like, the sound subtitle data display timing are substantially coincident with each other, and hence no problem occurs (FIG. 12). However, regarding the title of news, a live broadcast or the like, subtitle information is displayed later than the sound in many cases (FIG. 11).

Against such a backdrop, when the seek position of a moving image or a still image is determined irrespective of the genre of the title, subtitles are displayed for an image different from a scene expected by the user. Accordingly, by changing (by using a threshold having a size changed according to the genre) the threshold described in connection with FIG. 9 for each genre of the title, it is possible to carry out a seek to an image coincident with the subtitle data.

That is, by carrying out control in such a manner that a seek is carried out to a place (temporal position) obtained by subtracting a threshold from the subtitle data start time information on the basis of the genre of the title, it is possible to correct the difference between the subtitle display and (head of) image.

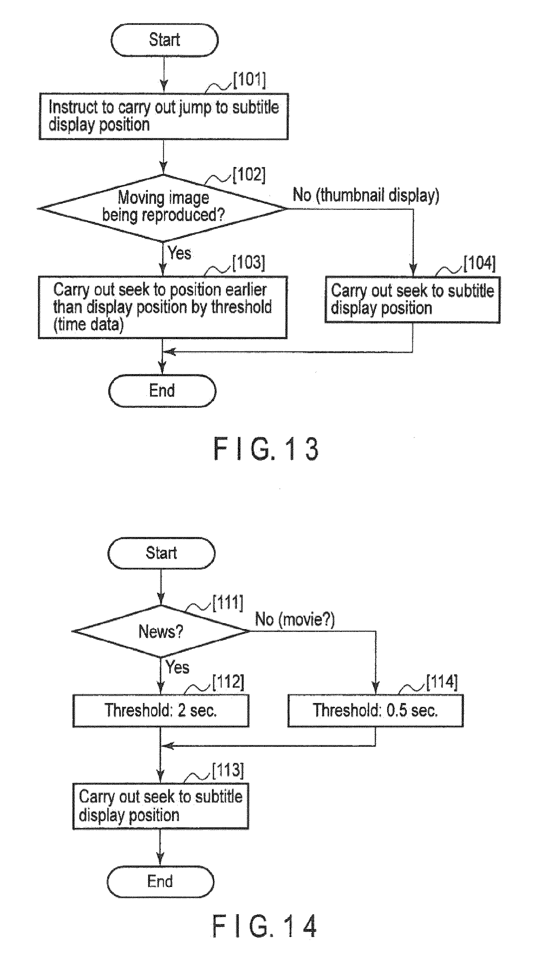

FIG. 13 is an example (flowchart) showing, in terms of software, adjustment of a position (temporal position) of an image relative to the subtitle start time to be carried out when subtitled scene jump based on the type of the image described in connection with FIG. 9, and FIG. 10 is executed.

As shown in FIG. 13, when an instruction to carry out subtitled scene jump is issued from the user (101), if it can be detected that a moving image is being reproduced (YES in 102), a seek is carried out to a position obtained by subtracting an amount corresponding to the threshold (time data) from the subtitle data display position (103).

On the other hand, when a non-moving image, for example, a still image or a thumbnail image is being reproduced (NO in 102), a seek is carried out to an image of the time (temporal position) as the display position (temporal position) of the subtitle data (104).

Thereby, it becomes possible for the user to recognize an image and the sound of the actual subtitle data display position.

FIG. 14 is an example (flowchart) showing, in terms of software, adjustment of a position (temporal position) of an image relative to the subtitle start time to be carried out when subtitled scene jump based on the genre of the image described in connection with FIG. 11 and FIG. 12 is executed.

When the subtitled scene jump is executed, the sound and subtitle data display timing are not coincident with each other according to the genre of the image as described above.

Accordingly, when it could have been detected that an image being reproduced at the time at which an instruction to carry out subtitled scene jump is received from the user is that of, for example, news or a live broadcast (YES in 111), a seek is carried out (113) to a position (112) obtained by subtracting a predetermined time, for example, two seconds from the display position (temporal position) of the subtitle data as the threshold (time data). It should be noted that the threshold (time data) is arbitrarily set on the basis of a difference between the image of the actual title and subtitles.

Conversely, when it could have been detected that an image being reproduced at the time at which an instruction to carry out subtitled scene jump is received is that of non-news such as a movie, drama, and the like or a live broadcast (NO in 111), a seek is carried out (113) to a position (114) obtained by subtracting a predetermined time, for example, 0.5 seconds from the display position of the subtitle data as the threshold (time data).

As described above, the adjustment amount (threshold) for the display position of the subtitle data, and display position of the image is changed (different thresholds are employed according to the genre of the title) on the basis of the genre of the image (title), whereby it becomes possible to realize a seek which makes the display position of the subtitle data, and display position of the image of the title coincident with each other.

It should be noted that although a description has been given in connection with FIG. 10, when image (title) is a thumbnail image, the threshold (adjustment amount for the display position of the subtitle data, and display position of the image) becomes [0 (zero)].

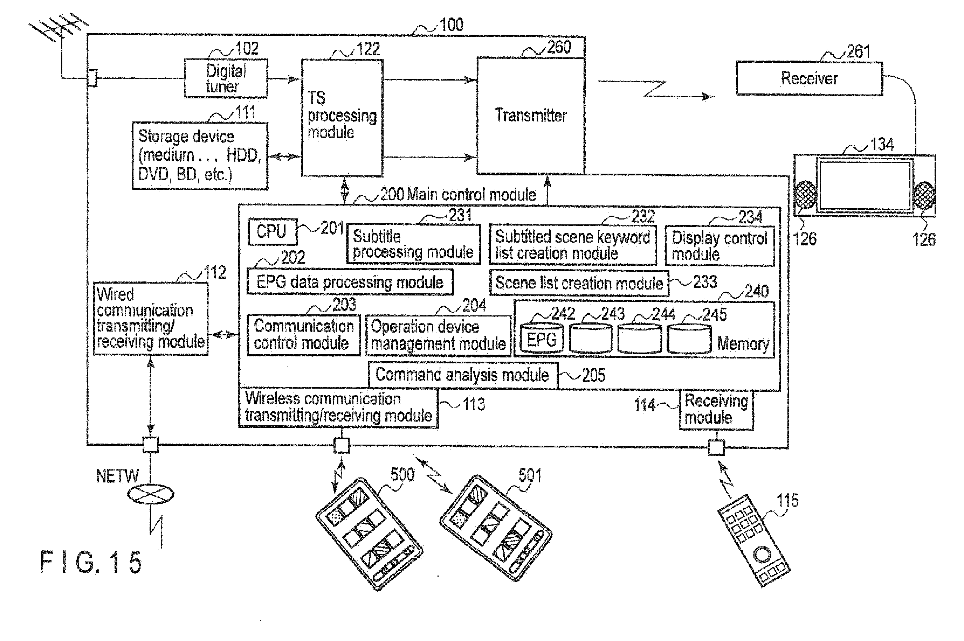

FIG. 15 shows another embodiment. In FIG. 15, a server 1101, and audiovisual device 2101 are provided. An image and sound can be watched and listened with a dedicated audiovisual device 2101. The image and sound are transmitted from the server 1101 to the audiovisual device 2101 through a transmitter 1102. The audiovisual device 2101 receives the image and sound transmitted thereto through a receiver 2102.

It should be noted that in the embodiment described above, it is premised that the subtitle data of subtitles transmitted together with a broadcast signal is utilized. However, the premise is not limited, to this, and it is also possible to utilize character data obtained by conversion based on sound/character conversion processing.

Furthermore, regarding constituent element of the claims, a case where expression is carried out by separating the constituent elements, a case where expression is carried out by combining a plurality of constituent elements with each other, and a case where expression is carried out by combining these cases with each other are realizable. Further, even in a case where a claim is expressed as a method, the device of the present invention is applied to the method.

Further, an embodiment is applicable as a computer-readable information storage medium or a program.

The functions explained in each of the above embodiments are not limited to structures using hardware. These functions can be also implemented by having a computer read a program describing each of the functions by the use of software. Each function may be configured by appropriately selecting software or hardware.

## Claims

1. An electronic device (100) **characterized by** comprising:
a subtitle data acquisition controller (231) configured to acquire subtitle data from a title being reproduced;
a seek instruction receiving controller (201(200)) configured to receive an instruction to carry out a seek to an image start point which is a temporal position corresponding to the subtitle data acquired by the subtitle data acquisition controller;
a title type identifying controller (201(200)) configured to identify a type of the title being reproduced at the point in time at which the seek instruction receiving controller has received the seek instruction; and
a display controller (234(200)) configured to control, when the seek is carried out to the image start point corresponding to the subtitle data with respect to the title being reproduced at the point in time at which the seek instruction receiving controller has received the seek instruction, the image start point corresponding to the temporal position of the subtitle data according to the title type identified by the title type identifying controller.

2. The electronic device of claim 1, **characterized in that**
the title type comprises a genre of the title.

3. The electronic device of claim 1, **characterized in that**
the title type comprises a moving image and a non-moving image.

4. The electronic device of claim 3, **characterized in that**
the title type comprises a genre of the title.

5. The electronic device of claim 2, **characterized in that**
the title type comprises a moving image and a non-moving image.

6. A method for controlling an electronic device **characterized by** comprising:
acquiring subtitle data from a title reproduced;
receiving an instruction to carry out a seek to an image start point which is a temporal position corresponding to the acquired subtitle data;
identifying a type of the title being reproduced at the point in time at which the seek instruction has been received; and
changing, when the seek is carried out to the image start point corresponding to the subtitle data with respect to the title being reproduced at the point in time at which the seek instruction has been received, the image start point corresponding to the temporal position of the subtitle data according to the identified title type.
